# EUROPÄISCHE PATENTANMELDUNG

(11) **EP 0 582 816 A1**
(43) Veröffentlichungstag der Anmeldung: **16.02.1994**
(21) Anmeldenummer: 93110080.4
(22) Anmeldetag: 24.06.1993
(51) Int. Cl.: B60T 7/22, B60R 19/02

(54) **Hindernis-Fühler für fahrerlose Fahrzeuge**

(30) Priorität: 08.08.1992 DE 4226319
(71) Anmelder: MaK System Gesellschaft mbH, D-24159 Kiel (DE)
(72) Erfinder: Müller, Peter, Dr.-Ing., D-2300 Kiel 1 (DE); Romanowski, Walter, D-2302 Flintbek (DE)
(74) Vertreter: Hansmann, Dierk, Dipl.-Ing.

(57) **Zusammenfassung**

Bei einer Vorrichtung für fahrerlose Fahrzeuge mit relativ großen Geschwindigkeiten, ist vorgesehen, einen Hindernis-Fühler vorzuschalten. Dieser Fühler (3) besitzt einen Ausweichbereich entsprechend der Bremsverzögerung und ist als Führungselement des Fahrzeuges über Verbindungsarme deichselartig dem Fahrzeug (1) vorgeschaltet. Die Verbindungsarme sind dabei entsprechend dem Bremsweg des Fahrzeuges durch eine teleskopierende und/oder verschwenkbare Ausbildung (8) und Anordnung verkürzbar.

## Beschreibung

Die Erfindung bezieht sich auf eine Vorrichtung für fahrerlose Fahrzeuge, die auf vorgegebenen Trassen über Sensoren ferngesteuert und/oder vorprogrammiert geführt sind und vorzugsweise mit Geschwindigkeiten größer als 5 km/h fahren, bestehend aus einem dem Fahrzeug in Fahrtrichtung vorgeschaltetem Hindernis-Fühler zur Ansteuerung einer Bremseinrichtung.

Fahrzeuge dieser Art bewegen sich auf vorgegebenen Trassen und fahren vergleichsweise schnell, wobei sie vorzugsweise im Außenbereich von Lager-, Umschlag- und Produktionsanlagen eingesetzt werden. Hierbei werden die Fahrzeuge mit weiteren Verkehrsteilnehmern, wie Menschen, gelenkten Transportfahrzeugen, eingesetzt. Daher besteht hierbei die wesentliche Forderung, daß die Fahrzeuge Hindernisse sicher erkennen und so rechtzeitig abbremsen müssen, daß es zu keinerlei Schäden, vor allem zu keinen Personenschäden kommt.

Die von langsam fahrenden Geräten dieser Art bekannten sogenannten Bumper genügen den hier zu stellenden Anforderungen nicht, wenn die bei vertretbaren Fahrzeugverzögerungen praktisch erforderlichen Bremswege in Abhängigkeit von der Fahrgeschwindigkeit berücksichtigt werden

| | | | |
|---|---|---|---|
| v = 5 | 7 | 10 | 15 km/h |
| s = 1 | 1,5 | 2,5 | 4,5 m |

Davon werden für die Totzeit bis zum Auslösen der Bremsung allein schon

| | | | |
|---|---|---|---|
| Sₒ = 0,4 | 0,6 | 0,8 | 1,3 m |

benötigt. Ein Bumper bekannter Bauart müßte beispielsweise bei einer Geschwindigkeit von 10 km/h bereits eine elastische Länge von ca. 2,5 m haben.

Aus der EU-OS 168 753 ist ein Fühler für höhere Fahrzeuggeschwindigkeiten der hier angesprochenen Größenordnung bekannt. Hierbei ist ein Tastorgan an einem vor dem Fahrzeug laufenden Sicherheitswagen angebracht, der bei Berührung eines Hindernisses durch eine Rückzieheinrichtung gegen das Fahrzeug abrupt, beispielsweise durch Federkraft, zurückgezogen wird und so den erforderlichen Bremsweg freigibt. Der Sicherheitswagen ist mit einem Wegsensor und einer eigenen Lenkeinrichtung ausgestattet und daher relativ schwer, so daß diese Anordnung selbst bereits zu einer Gefahr für in seinen Weg gelangende Personen wird. Dieses gilt insbesondere für die Verzögerungszeit zwischen Kontaktgabe und Auslösen des Brems- und Rückziehvorganges (z. B. 0,3 s) und für den in dieser Zeit zurückgelegten Weg Sₒ entsprechend der eingangs gezeigten Tabelle. Bei dieser bekannten Anordnung wird vorgeschlagen, die Verzögerungszeit Sₒ auf ein Minimum zu verkleinern sowie die Rückzugskräfte und damit die Rückzugsbeschleunigungen extrem zu steigern. Dieses führt aber zu Problemen im praktischen Einsatz.

Die Aufgabe der Erfindung ist es, einen gattungsgemäßen Hindernis-Fühler zu verbessern, der bei relativ hohen Fahrgeschwindigkeiten eine Minimierung des Stoßimpulses ermöglicht und gewährleistet, den Angriffsbereich bei Auftreffen auf ein Hindernis festzulegen bzw. zurückzuziehen.

Die Lösung dieser Aufgabe erfolgt erfindungsgemäß dadurch, daß der Hindernis-Fühler ausweichbar über einen Einfederungsweg entsprechend einer Bremsverzögerung ausgebildet ist und als Führungselement des Fahrzeuges über Verbindungsarme deichselartig dem Fahrzeug vorgeschaltet ist, wobei die Verbindungsarme wenigstens entsprechend dem Bremsweg des Fahrzeuges durch eine teleskopierende und/oder verschwenkbare Ausbildung verkürzbar sind.

Hierdurch wird ein vorgeschalteter Einfederungsbereich zur Aufnahme der Bremsverzögerung und Herabsetzung eines Stoßimpulses geschaffen. Weiterhin bleibt der Fühler quasi ortsfest stehen bzw. ist relativ zum Fahrweg zurückziehbar. Gleichzeitig wird durch die vorgeschaltete Führungs- und Sicherungsanordnung und die deichselartige Verbindung zum Fahrzeug eine Leichtbauweise ermöglicht.

Vorteilhafte Ausgestaltungen der Erfindung sind durch die Merkmale der Unteransprüche gekennzeichnet.

In der Zeichnung sind Ausführungsbeispiele der Erfindung schematisch dargestellt. Es zeigen:
- Fig. 1: eine Anordnung mit einem Hindernis-Fühler, mit einer radgestützten Aufnahme, die über einen Teleskoparm mit dem Fahrzeug verbunden ist, in der Fahrposition,
- Fig. 2: eine Anordnung gemäß Fig. 1 in der Bremsposition,
- Fig. 3: eine Draufsicht gemäß Fig. 1,
- Fig. 4 bis 6: eine weitere Ausführungsform eines Hindernis-Fühlers mit einer auf einem Luftpolster gleitenden Aufnahme in der Fahrposition, Bremssituation und in einer Draufsicht der Fahrposition,
- Fig. 7 und 8: eine Ausführungsform eines Hindernis-Fühlers mit einer mit Seilen versehenen, rotierenden Welle und senkrechter Rotationsachse,
- Fig. 9 und 10: eine Ausführungsform eines Hindernis-Fühlers entsprechend Fig. 7 und 8 mit waagerechter Rotationsachse in Fahrposition und Bremsposition **und**
- Fig. 11 bis 13: eine Ausführungsform eines Hindernis-Fühlers mit einem mit Preßluft gefüllten Schlauchsystem als Seitenansicht und Draufsicht in der Fahrposition und als Seitenansicht in der Bremsposition.

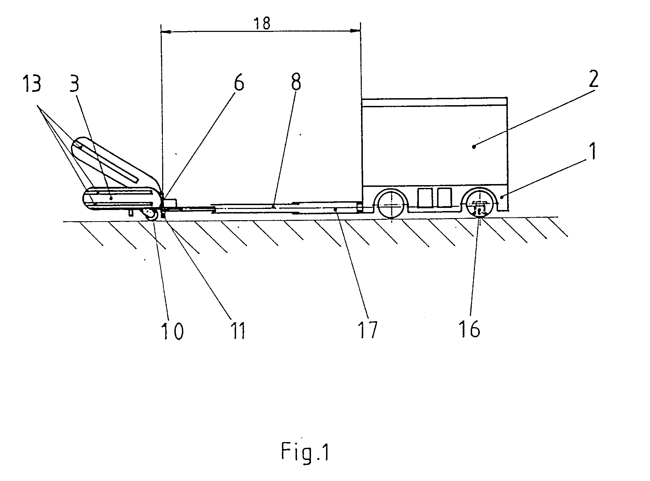

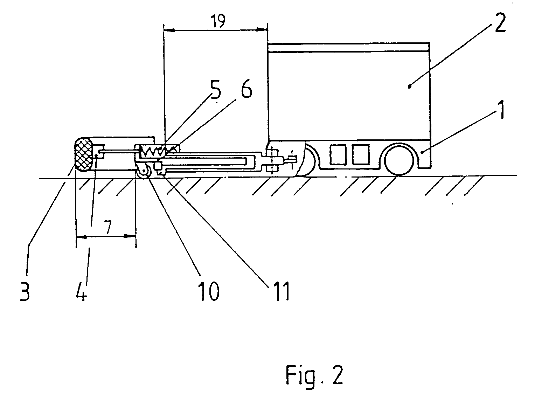

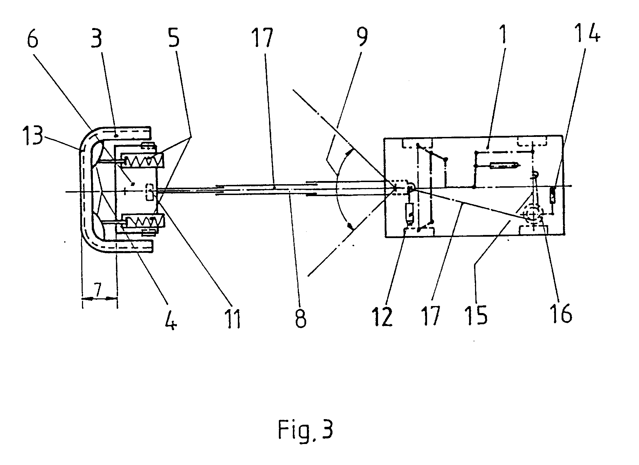

Die dargestellten Anordnungen werden für fahrerlose Transportfahrzeuge (FTF) 1 eingesetzt, die eine Nutzlast 2 mit einer Geschwindigkeit größer als 5 km/h befördern. Zur Absicherung ist gemäß Fig. 1 bis 3 in einem dem Bremsweg entsprechenden Abstand einen Fühler 3 vor dem Fahrzeug 1 angeordnet. Dieser Fühler 3 besteht beispielsweise aus einem elastischem, leichtem Material, wie Schaum-Elastomer, das zusätzlich über zwei elastische Federelemente 4 und Federzylinder 5 mit einer Aufnahme 6 verbunden ist. Dabei ist der Einfederungsweg 7 zwischen Fühler und Aufnahme 6 größer als der Fahrweg des Fahrzeuges 1 vom Berühren des Fühlers 3 durch ein Hindernis bis zum Auslösen des Bremsvorganges. Der Fühler 3 ist so aufgebaut, daß im wesentlichen nur der Teil, der mit dem Hindernis in Berührung kommt, von diesem abgestoppt und gegen die Fahrbewegung zurückgedrückt wird.

Die Aufnahme 6 ist über einen Teleskopzylinder 8 schwenkbar um den Winkel 9 mit dem Fahrzeug 1 verbunden und über ein nachlaufendes Rad 10 auf dem Fahrweg abgestützt. An der Aufnahme befindet sich eine Antenne 11, die ein Signal eines in dem Fahrweg verlegten Leitdrahtes sensiert und über eine nicht näher dargestellte Regelstrecke an einen Schwenkzylinder 12 weiterleitet. Dieser schwenkt die Aufnahme 6 über einen als Verbindungsträger angeordneten Teleskopzylinder 8 derart, daß die Antenne 11 mittig auf dem Leitdraht gehalten wird.

Berührt der Fühler 3 ein Hindernis, wird über im Fühler 3 integrierte Kontaktleisten 13 ein elektrisches Stoppsignal ausgelöst. Dieses schließt über einen Kuppelzylinder 14 eine nicht näher gezeigte Kupplung zwischen einer Antriebsachse 15 des Fahrzeuges 1 und einer Seiltrommel 16, so daß ein Seil 17 aufgewickelt wird, welches durch den Teleskopzylinder 8 an der Aufnahme 6 befestigt ist. Dieses geschieht mit der Fahrgeschwindigkeit des Fahrzeuges 1, und die Aufnahme 6 wird mit Fahrzeuggeschwindigkeit gegen das Fahrzeug 1 zurückgezogen, d.h. daß die Aufnahme 6, bezogen auf den Untergrund, stehenbleibt. Außerdem leitet das erfolgte Stoppsignal den Bremsvorgang des Fahrzeuges 1 ein, wobei die Bremsverzögerung mit Rücksicht auf das zu transportierende Gut und auf die Straßenverhältnisse nicht beliebig hoch angesetzt werden darf. Von der eingestellten Fahrzeugverzögerung und der maximal zugelassenen Fahrgeschwindigkeit hängt somit der maximal erforderliche Rückziehweg als Differenz der eingezeichneten Abstände 18 und 19 ab. Ist das Hindernis beseitigt, wird der Teleskopzylinder 8, beispielsweise mit Preßluft wieder ausgefahren und die Kupplung über den Zylinder 14 gelöst.

Ein derartig ausgestalteter Hindernis-Fühler ist somit in der Lage, auch bei höheren Geschwindigkeiten den Fahrweg ohne Schaden für das Fahrzeug und für andere Verkehrsteilnehmer abzusichern sowie Unfälle zu vermeiden.

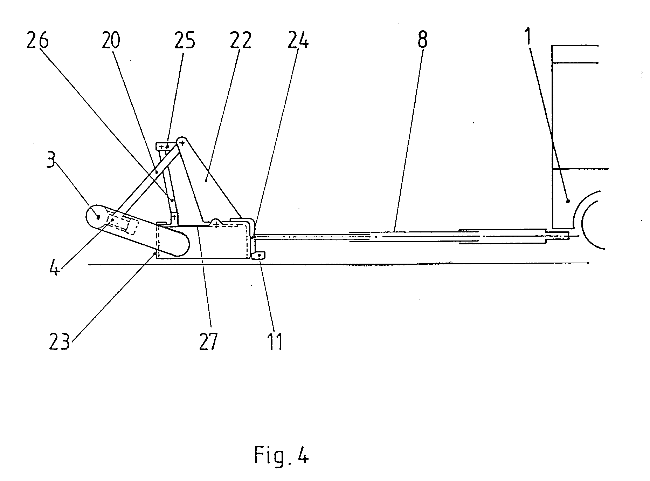

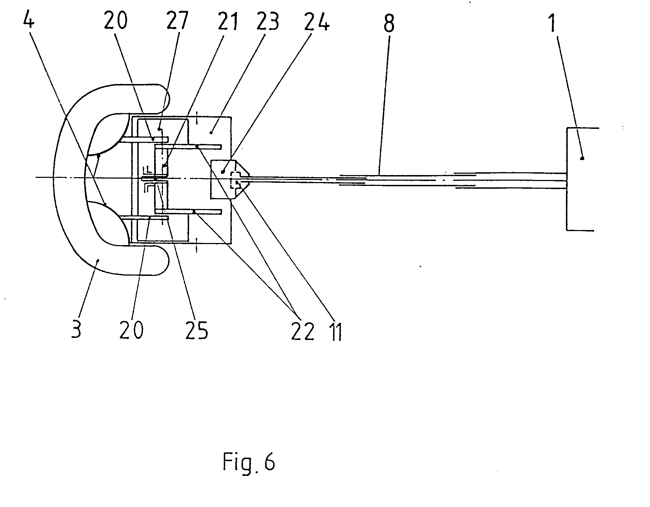

Gemäß Fig. 4 bis 6 ist eine Ausführungsvariante eines Hindernis-Fühlers dargestellt, bei dem der Fühler 3 über Arme 20, eine Welle 21 und Stützen 22 pendelnd an einer Aufnahme 23 angeordnet ist. Dabei sorgen in die Welle 21 integrierte Drehfedern dafür, daß der Fühler 3 im Normalzustand nach vorne ausgelenkt ist.

Die Aufnahme 23 ist vorzugsweise aus leichtem Material wie Aluminium oder faserverstärktem Kunststoff hergestellt und über einen Halteschuh 24 und einen Teleskopzylinder 8 mit dem Fahrzeug 1 schwenkbar verbunden. Von diesem wird Preßluft in den Teleskopzylinder 8 eingeblasen und in die Aufnahme 23 geleitet. Diese ist nach unten zumindest teilweise offen und hat elastische Begrenzungswände, die für eine gute Anpassung an den Boden sorgen. Infolgedessen kann sich unter der Aufnahme 23 ein Überdruck aufbauen, der diese mit dem Fühler 3 etwas über den Boden anhebt und so eine reibungsfreie Fortbewegung der Aufnahme ermöglicht. Die Spurführung erfolgt auch hierbei mit Hilfe der Antenne 11, die mit einem nicht näher gezeigten Schwenkzylinder für den Teleskopzylinder 8 zusammenwirkt.

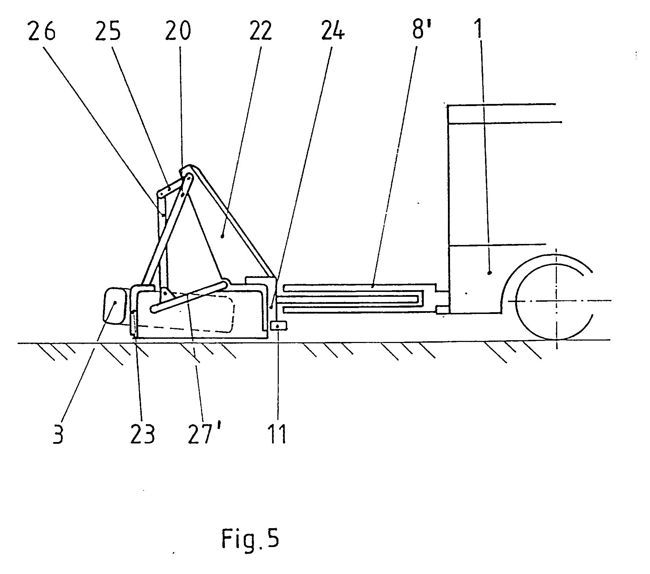

Bei Auftreten eines Hindernisses wird zunächst ein Teil des Gesamt-Bremsweges durch Verformung und Verschwenken des Fühlers 3 gefahrlos freigegeben. Gleichzeitig öffnet der Fühler 3 über die Welle 21 und Hebel 25 sowie Koppelstangen 26 Klappen 27 in der Aufnahme 23, die dann eine Position 27' gemäß Fig. 5 einnehmen, so daß der Überdruck augenblicklich entweicht und die Aufnahme 23 infolge ihres Eigengewichtes sich auf die Fahrbahn absenkt. Über entsprechende Kontaktleisten wird, wie bereits beschrieben, gleichzeitig ein Bremsvorgang des Fahrzeuges 1 eingeleitet. Der Teleskopzylinder 8 schiebt sich zwischen Aufnahme 23 und Fahrzeug 1 zusammen, wodurch sich eine Ausbildung 8' ergibt, so daß auch hier ein Bremsweg für das Fahrzeug 1 zur Verfügung steht.

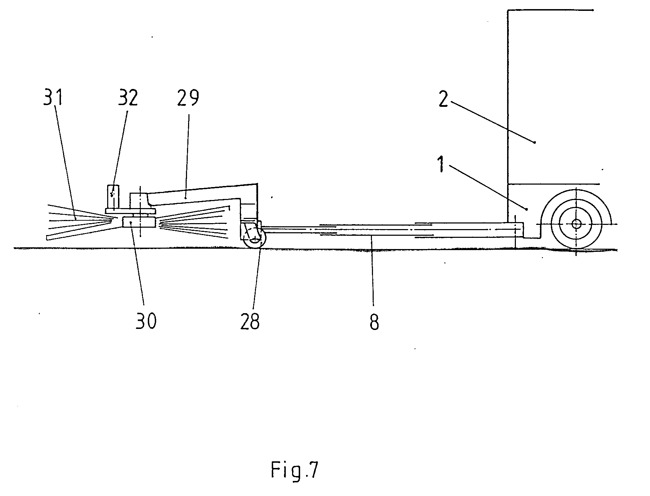

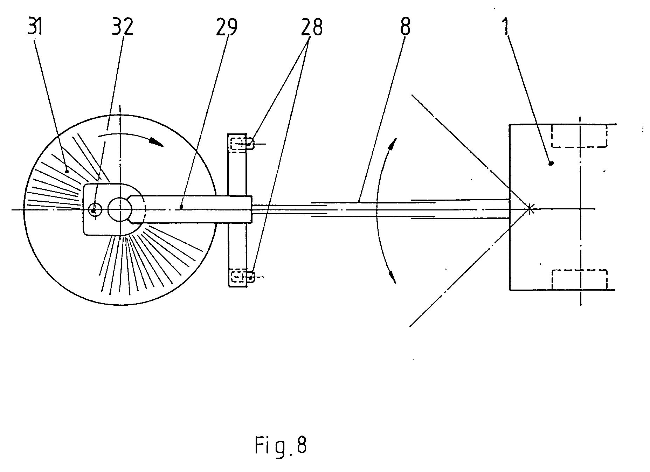

Eine weitere Ausführungsvariante ist in Fig. 7 und 8 dargestellt. Hierbei befindet sich an einer über nachlaufende Rollen 28 abgestützten Aufnahme 29 eine in waagerechter Ebene rotierende Trommel 30 mit elastischen Seilen bzw. Borsten 31, wobei deren Länge so bemessen ist, daß sie den Fahrweg zwischen Auslösen eines Stoppsignals und Auslösen des Bremsvorganges abdecken.

Wird ein Hindernis berührt, so wird dieses bei entsprechender Leichtgewichtigkeit aus dem Weg geräumt, ohne daß es zu einem Stoppvorgang kommt und Fehlstopps weitgehend vermieden. Bei wirklichen Hindernissen wird die Drehzahl der Trommel 30 durch die Berührung mit den Seilen 31 reduziert. Dieser Drehzahlabfall wird beispielsweise durch den Stromanstieg am elektrischen Antriebsmotor 32 erkannt und für die Auslösung eines Bremsvorganges und das Zurückziehen der Aufnahme 29 gegen das Fahrzeug 1 eingeleitet.

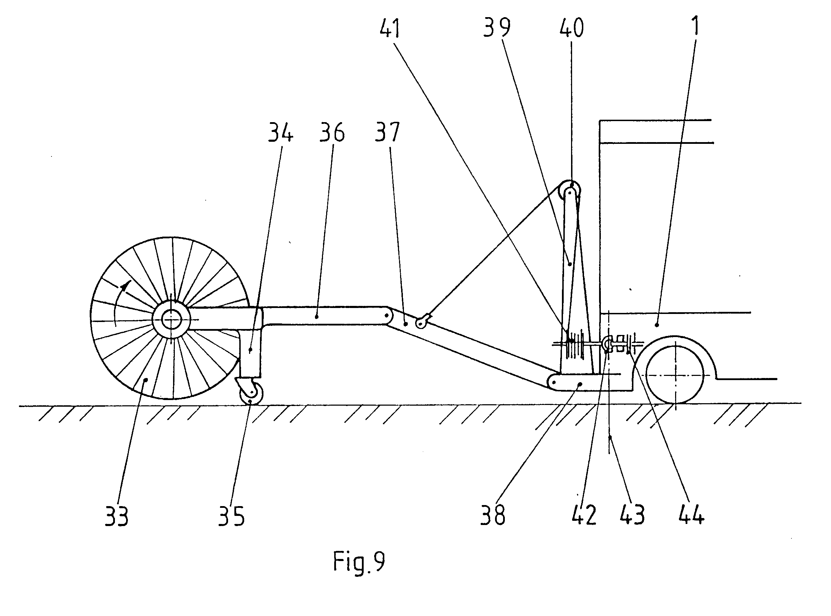

Auch eine um eine waagerechte Achse rotierende Trommel 33 gemäß Fig. 9, erfüllt in Verbindung mit einer Aufnahme 34 die Funktion des Hindernis-Fühlers. In diesem Ausführungsbeispiel ist die Aufnahme 34 mit nachlaufenden Rädern 35 versehen und mit einer Verlängerung 36 an einem Hubarm 37 befestigt. Dieser ist an einer Schwenkbühne 38 befestigt, die außerdem einen Mast 39 mit einer Umlenkrolle 40 und eine Seiltrommel 41 aufnimmt. Die Seiltrommel 41 wird über ein Kardan-Gelenk 42, welches in Verlängerung der Schwenkachse 43 angeordnet ist, und eine Schaltkupplung 44 vom Achsantrieb des Fahrzeuges 1 angetrieben.

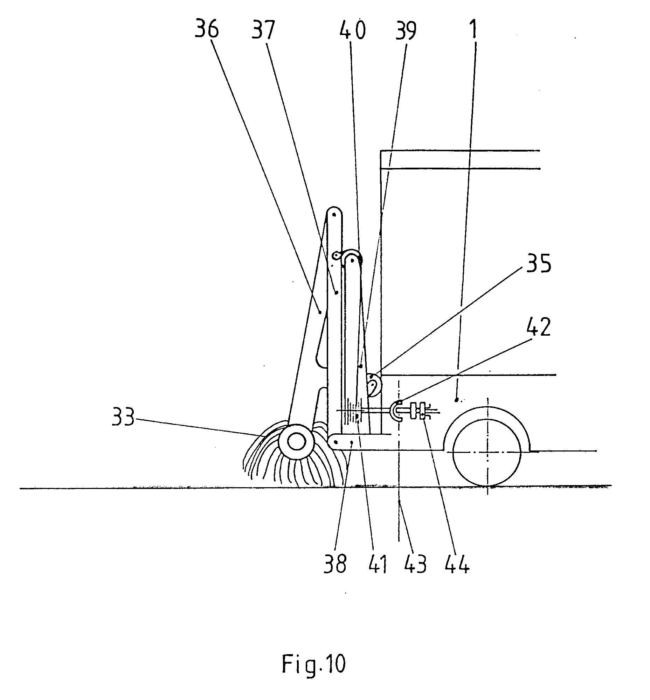

Im Hindernisfall wird zunächst die Drehzahl der Trommel 33 abgesenkt. Dies führt zum Auslösen des Bremssignals und zum Einkuppeln der Kupplung 44. Die Trommel 41 dreht sich proportional der abnehmenden Fahrgeschwindigkeit und zieht die Aufnahme 34 über die Verlängerung 36 und den Hubarm 37 an das Fahrzeug heran und hoch. In eingezogenem Zustand ist die in Fig. 10 gezeigte Position erreicht, wobei ein maximaler Bremsweg freigegeben wird.

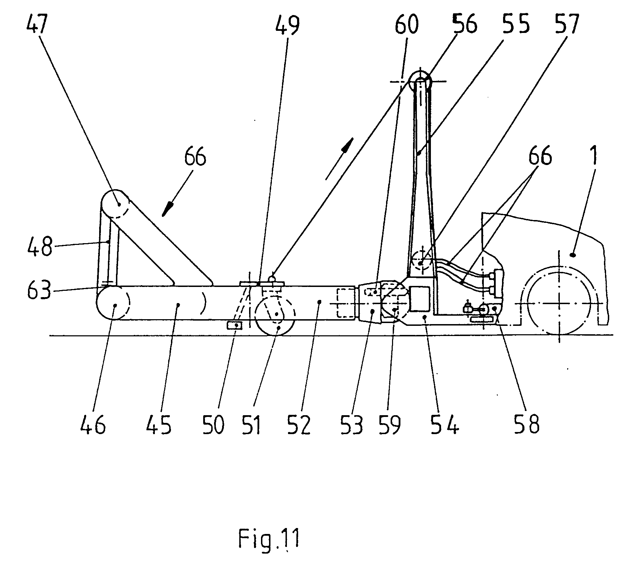

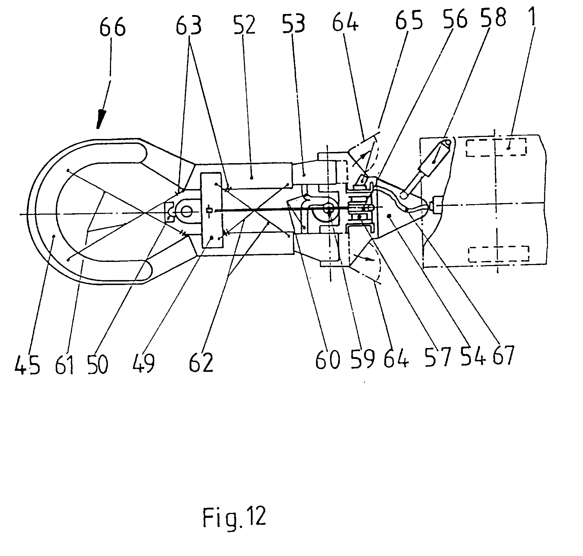

Eine besonders leichte und vorteilhafte Variante ist in Fig. 11 bis 13 gezeigt. Hier ist der Fühler als gummielastischer Hohlkörper 45 ausgebildet, der im Betriebszustand aufgeblasen ist und dadurch seine stabile Form erhält. Sein vorderer Teil 66 ist durch zwei Ringstücke 46, 47 gebildet, zwischen denen zur Abdeckung des gesamten Querschnitts Leinen 48 gespannt sind. In seinem mittleren Bereich trägt der Hohlkörper 45 eine leichte Aufnahmeplatte 49 für eine Leitdrahtantenne 50 und gegebenenfalls ein nachlaufendes Stützrad 51. Beide Schlauchenden 52 des Hohlkörpers 45 sind mit Schwenkstutzen 53 verbunden, die in einer Schwenkbühne 54 gelagert sind. Die Schwenkbühne 54 trägt außerdem einen Mast 55 mit einer Umlenkrolle 56 und einer Seiltrommel 57. Die Spurführung der Aufnahme 34 erfolgt wieder im Zusammenwirken von Antenne 50 und Schwenkzylinder 58. die Preßluft für den Hohlkörper 45 kann vom Fahrzeug 1 über das Hohlprofil der Schwenkbühne 54 und die Schwenkstutzen 53 zugeführt werden. Vorteilhafter ist die Installation eines elektrisch angetriebenen Gebläses 59 zwischen den Schwenkstutzen 53 und Zuführung der Luft durch Rohre 60.

Bei einer Hindernisberührung, unabhängig von der Richtung, wird mindestens einer der Spanndrähte 61, 62 und gegebenenfalls auch eine der Leinen 48 entspannt. In diese integrierte elektrische Schaltelemente 63 lösen das Stoppsignal aus. Dieses leitet den Bremsvorgang des Fahrzeuges 1 ein, öffnet Entlüftungsklappen 64 in der Schwenkbühne 54 und setzt die Seiltrommel 57 in Betrieb.

Die Seiltrommel 57 wird über einen Hydraulikmotor 65, Verbindungsschläuche 67 und eine nicht gezeigte Hydraulikpumpe nach Schalten entsprechender Ventile angetrieben, wobei die Hydraulikpumpe ihrerseits mit der Antriebsachse des Fahrzeuges 1 fest verbunden ist.

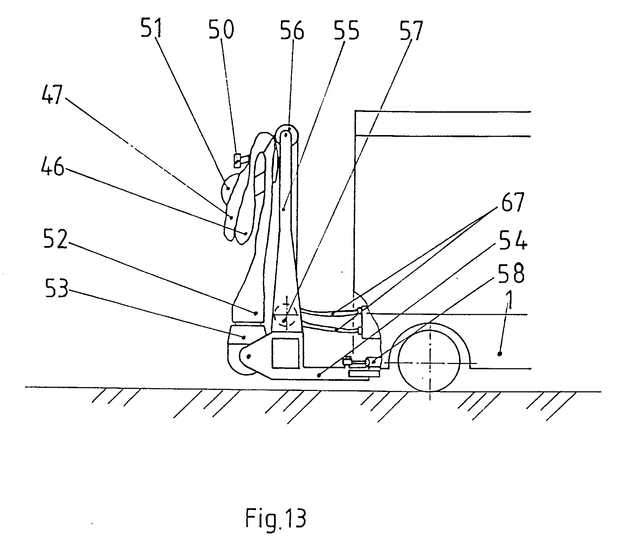

Das Zusammenspiel der geschilderten Funktionen bewirkt, daß der Hohlkörper 45 schlaff wird und dem Hindernis nur minimale Kräfte entgegensetzt. Gleichzeitig wird der Hohlkörper in der Mitte hochgezogen und an den Mast 55 geschwenkt. Sein vorderer Teil 66 kippt infolge der Schwerkraft nach unten und fällt in sich zusammen, vergleiche Fig. 13. Damit ist auch hier der Bremsweg frei, und das Fahrzeug 1 kann ausrollen.

## Patentansprüche

1. Vorrichtung für fahrerlose Fahrzeuge, die auf vorgegebenen Trassen über Sensoren ferngesteuert und/oder vorprogrammiert geführt sind und vorzugsweise mit Geschwindigkeiten größer als 5 km/h fahren, bestehend aus einem dem Fahrzeug in Fahrtrichtung vorgeschaltetem Hindernis-Fühler zur Ansteuerung einer Bremseinrichtung, dadurch gekennzeichnet, daß der Hindernis-Fühler (3) ausweichbar über einen Einfederungsweg (7) entsprechend einer Bremsverzögerung ausgebildet ist und als Führungselement des Fahrzeuges (1) über Verbindungsarme (8) deichselartig dem Fahrzeug vorgeschaltet ist, wobei die Verbindungsarme (8) wenigstens entsprechend dem Bremsweg des Fahrzeuges (1) durch eine teleskopierende und/oder verschwenkbare Ausbildung verkürzbar sind.

2. Vorrichtung nach Anspruch 1, dadurch gekennzeichnet, daß der Hindernis-Fühler (3) über eine Aufnahme (6) angeordnet ist, die durch ein Rad (10) am Boden geführt und über teleskopierende und/oder verschwenkbare Verbindungsarme (8) gegenüber dem Fahrzeug (1) angeordnet ist.

3. Vorrichtung nach Anspruch 1, dadurch gekennzeichnet, daß der Hindernis-Fühler (3) über eine Aufnahme (23) angeordnet ist, die als Luftkissenelement ausgebildet und bei Ansteuerung der Bremseinrichtung einen Auslaß (27') für das Luftkissen öffnet bzw. die Luftzufuhr absperrbar ist und die Aufnahme (23) über teleskopierende und/oder verschwenkbare Verbindungsarme (8) gegenüber dem Fahrzeug 1 angeordnet ist.

4. Vorrichtung nach Anspruch 1, dadurch gekennzeichnet, daß eine Aufnahme (29) über teleskopierende und/oder verschwenkbare Verbindungsarme (8; 36, 37) mit dem Fahrzeug (1) verbunden ist und der Hindernis-Fühler an der Aufnahme (29) durch rotierende elastische Seile bzw. Borsten (31) gebildet ist und bei Absinken der Rotationsdrehzahl durch auftretende Hindernisse einen Bremsvorgang einleitbar und eine Verkürzung der Verbindungsarme (8; 36, 37) ansteuerbar ist.

5. Vorrichtung nach Anspruch 4, dadurch gekennzeichnet, daß die elastischen Seile bzw. Borsten (31) des Hindernis-Fühlers (3) an eine vertikale oder horizontale Achse rotieren.

6. Vorrichtung nach Anspruch 4, dadurch gekennzeichnet, daß die Länge der elastischen Seile bzw. Borsten (31) entsprechend dem Weg (7) einer Bremsverzögerung bemessen sind.

7. Vorrichtung nach Anspruch 1, dadurch gekennzeichnet, daß der Hindernis-Fühler (3) und die Verbindungsarme (52) zum Fahrzeug (1) aus aufblasbaren, elastischen Hohlprofilen besteht, die beim Auftreffen auf Hindernisse geöffnet und/oder über Seilanordnungen verschwenkbar und/oder zusammenziehbar sind.
